# EUROPÄISCHE PATENTANMELDUNG

(11) **EP 1 779 747 A2**
(43) Veröffentlichungstag der Anmeldung: **02.05.2007**
(21) Anmeldenummer: 06022567.9
(22) Anmeldetag: 28.10.2006
(51) Int. Cl.: A47B 87/00, F16B 12/44

(54) **Verbindungselement und lösbares Verbindungssystem für vorgefertigte Möbelteile oder -Baugruppen**

(30) Priorität: 31.10.2005 DE 202005017024 U
(71) Anmelder: Firma Bettina Trümper, 37351 Kreuzebra (DE)
(72) Erfinder: Trümper, Jörg, 37351 Kreuzebra (DE)
(74) Vertreter: Seckel, Uwe

(57) **Zusammenfassung**

Die Erfindung bezieht sich auf ein Verbindungselement und ein lösbares Verbindungssystem für vorgefertigte Möbelteile und - baugruppen, wobei das Verbindungselement (1) aus einem zylinderförmigen Formteil (2) und einem mindestens konischen Formteil (3,3a,3b,3x) besteht, das umfangsseitig mittels eines Steges am zylinderförmigen Formteil (2) fest oder lösbar festgelegt ist und bei dem zur Herstellung einer Verbindung zwischen mindestens zwei Möbelteilen (30,31,31a,31b,31c) das zylinderförmige Formteil (2) in eine vertikale liegende und mindestens einfach längsgeschlitzte Bohrung (26) des einen Möbelteils (30) eingesetzt oder auf diesem Möbelteil aufgesetzt wird, wobei das konische verlaufende Formteil (3,3a,3b,3x) in eine für den Steg (4,4a,4b,4x) geschlitzte Aufnahmeöffnung (29) des zu verbindenden Möbelteils (31,31a,31b,31x) eingesetzt wird, die eine Innenkontur aufweist, die mit dem eingesetzten konischen verlaufenden Formteil eine stabile formschlüssige Verbindung ausbildet. Mit diesem Verbindungssystem können wirtschaftlich beispielsweise Tische und Tischsysteme aber auch andere Möbelverbindungen ausgeführt werden, die individuell an gewünschte Gestaltungsformen angepasst werden können.

## Beschreibung

Die Erfindung betrifft ein Verbindungselement und ein lösbares Verbindungssystem für vorgefertigte Möbelteile oder -baugruppen.

Verbindungselemente und lösbare Verbindungssysteme für den Zusammenbau von Möbeln aus vorgefertigten Einzelteilen oder -baugruppen sind in vielfachen Ausführungen allgemein bekannt.

Diese Verbindungselemente und Verbindungssysteme bestehen im allgemeinen aus bekannten schraubbaren und/oder steckbaren Montageelementen. Eine damit ausgeführte Verbindung gewährleistet zwar bei einer einmaligen Montage eines Systemmöbelsystems einen ausreichenden stabilen Halt der verbundenen Einzelteile, neigt aber speziell bei einer mehrfachen Montage und Demontage der Möbel aus welchen Gründen auch immer zur Instabilität der montierten Möbel. Dieser Umstand ist insbesondere bei Einrichtungsgegenständen unbefriedigend, deren Standort häufig Veränderungen unterliegt und/oder die beispielsweise nur für eine zeitlich begrenzte Nutzungsdauer, wie u.a. bei Veranstaltungen, montiert und anschliessend wieder zur platzsparenden Aufbewahrung demontiert werden.

Darüber hinaus erfordern diese Verbindungselemente und Verbindungssysteme meistens einen relativ hohen Zeitaufwand für die Montage und Demontage und sind auch nicht dazu geeignet, dass aus Einzelteilen oder Baugruppen individuelle Kombinationen und Größen, wie beispielsweise Tischkombinationen, die den räumlich notwendigen Charakter einer Veranstaltung angepasst sein sollen, als ein in sich stabiles und schlüssig verbundenes ästhetisches Gesamtbild mit wenigen Handgriffen zu gestalten.

Aus der DE 295 08 415 U1 ist eine Tischbefestigung bekannt, bei der die Tischplatte mit einer Unterkonstruktion ausgebildet wurde, an der ein konzentrischer Gewindebolzen vorgesehen ist, der in eine im Tischbein vorgesehene konzentrische Bohrung mit Innengewinde eingeschraubt wird. Diese Verbindungsart ist zum einen sehr aufwendig in der Herstellung und kann zum anderen die bereits dargestellten Mängel nicht vollständig beheben. Darüber hinaus ist diese Tischbeinbefestigung auch nicht geeignet zur Verbindung mehrerer Tischplatten, die zu einem individuell auszulegenden und in sich verbundenen Tischsystem zusammengesetzt werden sollen.

In der DE 199 12 994 A1 und der DE 93 08 950.3 ist ein zerlegbarer Tisch bzw. ein Tisch mit klappbarer Tischbeinanordnung bekannt, die zeit- und raumsparend aufgestellt und zusammengelegt werden können. Auch diese Verbindungen und die dafür vorgeschlagenen Verbindungsmittel sind nach mehrfacher Aufstellung und Zerlegung des Tisches verschleissanfällig und sichern folglich nach einer gewissen Zeit keine ausreichende Standfestigkeit mehr. Aber auch ein schlüssiges Zusammenfügen von mehreren Tischen, die zu einem individuell gestalteten und geschlossenen Tischsystem gestaltet werden sollen, ist mit diesen Ausführungen nicht möglich.

Aus der AT 002642 U1 ist ein Verbindungselement zur lösbaren Verbindung von mehreren Trageelementen, insbesondere für Möbel und Möbelteile bekannt, wobei das Verbindungselement einen Haltebügel zur Aufnahme von zumindest einem längsgestreckten Profilkörper und zumindest ein am Haltebügel drehbar gelagertes exentrisches Klemmteil aufweist, welches über ein Druckstück quer auf dem Profilkörper einwirkt, so dass beim Verdrehen des Klemmteils der Profilkörper kraftschlüssig mit dem Verbindungselement verbunden wird. Mit diesem Verbindungselement ist zwar eine schnelle Montage und Demontage von Möbelteilen möglich, setzt aber immer voraus, dass die Möbelteile als langgestreckte Profilträger ausgebildet sind, was zumindest bei vormontierten Möbelbaugruppen im allgemeinen nicht der Fall ist. Aber auch eine Anpassung an eine individuell gestalterische Anordnung der Möbelteile, beispielsweise zur Zusammenstellung eines räumlich gestalteten Konferenztisches oder zur lösbaren Verbindung eines oder mehrerer Füße an eine Tischplatte oder anderer Möbelteile ist mit diesem Verbindungselement nicht möglich. Desweiteren kann auch nicht ausgeschlossen werden, dass nach mehrfachen Montagen und Demontagen die exentrische Klemmverbindung infolge von Verschleisserscheinungen instabil wird.

Aufgabe der vorliegenden Erfindung ist es daher ein Verbindungselement und lösbares Verbindungssystem für vorgefertigte Möbelteile und -baugruppen zu schaffen, mit dem kostengünstig und mit geringem Zeitaufwand eine Montage und Demontage von Möbelteilen und -baugruppen möglich ist, mit dem dauerhaft auch nach mehrfachen Montagen und Demontagen ein stabiler Möbelaufbau gewährleistet ist und das die Voraussetzung schafft, dass Möbelteile und -baugruppen mit nur einem Grundsystem eines Verbindungselements räumlich individuell zu einem insich geschlossenen Möbelsystem zusammenfügbar sind.

Diese Aufgabe wird erfindungsgemäß durch ein Verbindungselement und Verbindungssystem gelöst, bei dem dass Verbindungselement aus einem zylinderförmigen Formteil beliebigen Querschnitts und mindestens aus einem konischen verlaufenden Formteil besteht, das umfangsseitig am zylinderförmigen Formteil mittels eines Steges fest oder lösbar festgelegt ist und dass zur Herstellung der Verbindung zwischen zwei Möbelteilen das zylinderförmige Formteil in eine vertikal liegende und mindestens einfach längsgeschlitzte Bohrung des einen Möbelteils fest oder lösbar eingesetzt oder auf diesem Möbelteil fest oder lösbar aufgesetzt ist und das konische verlaufende Formteil in eine für den Steg mindestens teilweise seitlich geschlitzte Aufnahmeöffnung des zu verbindenden Möbelteils eingesetzt ist, die eine Innenkontur aufweist, die mit dem eingesetzten konischen verlaufenden Formteil eine stabile formschlüssige Verbindung ausbildet.

Mit diesem Verbindungselement und Verbindungssystem, das sowohl als unterstützendes oder auch als ein von oben stabilisierendes Verbindungssystem nutzbar ist, kann die Montage und Demontage von Möbelteilen und -baugruppen mit einfachen und wenigen Handgriffen und folglich mit geringstem Zeitaufwand durchgeführt werden.
Darüber hinaus wird durch die unlösbare Verbindung aber auch bei einer entsprechenden Ausführung durch eine lösbare Verbindung des konischen Formteils am zylinderförmigen Formteil über den Steg ein in sich stabiles Verbindungselement zur Verfügung gestellt, mit dem die zu verbindenden Möbelteile dauerhaft oder nur für eine bestimmte Zeitdauer zu einem in sich stabilen Möbel oder Möbelsystem zusammengefügt werden können und das auch nach mehrfachen Montagen und Demontagen der Möbelteile verschleissfrei bleibt.

Beim unlösbaren oder lösbaren Einsetzen des zylinderförmigen Formteils in eine an das Formteil angepasste Bohrung des einen Möbelteils, die je nach der Anzahl der zu verbindenden weiteren Möbelteile, zum Durchführen der Stege mit den daran verbundenen konischen Formteilen einfach oder mehrfach geschlitzt ist, ist zum einen bei einer entsprechenden Anpassung der Schlitze an die Breite des Stegs gewährleistet, dass dieses Formteil bereits nach dem Einsetzen in die Bohrung annähernd spielfrei arretiert in diesem Möbelteil versenkt festgelegt ist und zum anderen bilden die Stege des konischen Formteils mit der formgenau korrospondierenden und mindestens teilweise geschlitzten Buchse des zu verbindenden Möbelteils nach dem Einsetzen eine formschlüssige Verbindung aus, bei der das aufgesetzte Möbelteil bereits im lösbaren Zustand zusätzlich lagestabil und verschleissfrei fixiert ist.

Aber auch beim Aufsetzen des zylinderförmigen Formteils auf ein Möbelteil kann beispielsweise mit einer verschraubten Konusverbindung eine Verbindung hergestellt werden, mit der die verbundenen Möbelteile dauerhaft verschleissfrei und lagestabil fixiert sind.

Folglich wird mit diesem Verbindungselement und diesem Verbindungssystem nicht nur eine zuverlässige Stabilität bei einem dauerhaften Zusammenbau von Möbelteilen und/oder -baugruppen gesichert, sondern insbesondere auch bei Systemmöbeln, die aus welchen Gründen auch immer, nur für eine begrenzte Nutzungsdauer benötigt werden und deshalb einer mehrfachen Montage und Demontage unterworfen sind.

Vielmehr, durch die Möglichkeit der Anordnung von einem oder mehreren konischen Formteilen gleicher Ausführungsart an ein als zentral gelegtes zylinderisches Formteil können nach Bedarf sehr wirtschaftliche und nur mit einen Grundsystem beliebig große und räumlich gestaltete Möbelsysteme, wie u. a. Konferenztische, zu in sich geschlossenen Möbelsystemen oder als Einzelmöbel zusammengefügt werden. Dabei können insbesondere Tische und Tischkombinationen zusätzlich mit gestalterischen Elementen versehen werden, in dem die Oberflächen der versenkten Verbindungselemente vollständig in der Ebene des Tisches oder der Tischkombination sichtbar sind oder beispielsweise die konischen Formteile und/oder Stege durch die verbundenen Tischplatten überdeckt werden oder die Oberflächen mit einer zusätzlichen Dekorabdeckung belegt werden.

Darüber hinaus können mit diesen Verbindungsmitteln und nach diesem Verbindungssystem zusammengefügte Möbelsysteme, wie z. B. Tische, die nur zeitlich begrenzt benutzt werden, schnell demontiert werden und die demontierten Möbeleinzelteile können sehr raumsparend aufbewahrt sowie problemlos und platzsparend transportiert werden.

Nach einer Ausbildungsform der Erfindung kann das konische verlaufende Formteil aus fertigungstechnischen Gründen auch aus einem beliebigen zylinderischen Querschnitt bestehen, der vorteilhafterweise ein runder Querschnitt ist, wobei die Mantelfläche mit mindestens drei annähernd gleichmäßig versetzt und konisch ausgebildeten Längsstreifen versehen ist, die einstückig auf der Mantelfläche ausgebildet sind oder die lösbar oder unlösbar in der Mantelfläche in axial verlaufende Einfräsungen eingesetzt sind. Damit kann der Materialeinsatz für das konische Formteil minimiert und der gleichmäßige Flächenkontakt über die Länge des Konusses zwischen dem konischen Verlauf des Formteils und der korrospondierenden Ausnehmung des betreffenden Möbelteils verbessert werden, insbesondere dann, wenn der konische Verlauf durch eingelegte konische Längsstreifen erreicht wird, die vorteilhafterweise aus einem Kunststoff bestehen.

Nach einer besonders bevorzugten Ausführungsform der Erfindung besteht das konische Formteil ebenfalls aus einem beliebigen zylinderischen Querschnitt, der vorteilhafterweise wieder ein runder Querschnitt ist und dessen Mantelfläche mit einer längsverlaufenden Eindrehung ausgebildet ist, in der eine Hülse mit einer konischen Mantelfläche, die bevorzugt eine Kunststoffhülse ist, lösbar oder fest eingesetzt ist und die vorteilhafterweise axial lagestabilisiert und bevorzugt eine geschlitzte Spreizhülse ist. Mit der Ausbildung des konischen Verlaufs durch eingesetzte und vorteilhafterweise lösbare konische Streifen oder einer lösbaren Buchse mit einer konischen Mantelfläche kann der Winkel des konischen Verlaufs des Formteils bei Bedarf auf eine sehr einfache Art und Weise durch Austausch dieser Teile geändert oder der konische Verlauf des Formteils umgekehrt werden. Damit ist die Voraussetzung gegeben, dass ein und dasselbe Verbindungsmittel auf eine einfache Art und Weise an einen veränderten Konuswinkel problemlos angepasst werden kann und das Verbindungsmittel sowohl als ein unterstützendes Verbindungsmittel von unten als auch als ein stabilisierendes Verbindungsmittel von oben verwendet werden kann.

Nach einer weiteren vorteilhaften Ausführungsform der Erfindung ist die lösbare Verbindung der mit einem konischen Formteil fest verbundenen Stege am zylinderförmigen Formteil eine arretierte Klemmverbindung, wobei bevorzugt das zylinderförmige Formteil aus einem Bolzen besteht, der auf der einen Seite mit einem innen gerichteten hinterdrehten Ansatz und auf der anderen Seite durch ein axiales einschraubbares Spannmittel mit zum Ansatz des Bolzens hinterdrehten Ansatz begrenzt ist und der Steg an der freien Stirnseite mit einem Arretierungsmittel ausgebildet ist, dass eine zum zylinderischen Formteil korrospondierende Form aufweist und axial beiderseits je mit einem hakenförmigen Ansatz ausgebildet ist, die nach dem Ansetzen des Steges an den Bolzen formschlüssig einerseits in den hinterdrehten Ansatz des Bolzens und andererseits in den hinterdrehten Ansatz des zu verspannenen Spannmittels eingreifen.

Durch diese arretierte Verbindungsform der Stege am zylinderischen Formteil ist/sind zum einen der oder die mit dem zylinderischen Formteil lösbar verbundenen konischen Formteile verschleissfrei verbunden und so stabilisiert, dass verbundene Möbelteile stets dauerhaft stabil verbunden sind und zum anderen ist die Voraussetzung gegeben, dass mit nur einem zentral liegenden zylinderförmigen Formteil mehrfach Möbelteile in verschiedenen Winkeln aber auch Radien zu insich geschlossenen Möbelsystem zusammengefügt werden können.

So kann beispielsweise mit nur einem Grundsystem ein Verbindungselement mit einem oder zwei um 180° versetzten oder zwei um 90° versetzten oder zwei im 90° und ein um 180° versetzten oder vier auf einen Kreis gleichmäßig versetzten oder mindestens zwei in einem Winkelbereich von 90° bis 135° konisch verlaufenden Formteilen ausgelegt werden, so dass die verschiedensten Grundformen und Größen beispielsweise von Tischkombinationen als insich geschlossene Möbelsysteme zusammengestellt werden können.

Folglich ist ein derartig ausgebildetes Verbindungselement universell einsetzbar und sehr wirtschaftlich nutzbar.

Nach einer weiteren bevorzugten Ausführungsform der Erfindung sind die korrospondierenden Anlageflächen des Arretierungsmittels des Steges und der Eindrehung des Bolzens ausgehend von der Hinterdrehung des Ansatzes des Bolzens mindestens teilweise konisch ausgebildet. Durch die konische Ausbildung der zusammenwirkenden Flächen des Arretierungsmittels und des Bolzens des zylinderförmigen Formteils ist bei der lösbaren Verbindung der konischen Formteile das zylinderische Formteil im Bereich der Aufnahme der einwirkenden Kräfte, insbesondere bei einem zusammengestellten Möbelteil mit nur einem Stützfuß, stabiler ausgelegt.

Nach einer weiteren bevorzugten Ausführungsform der Erfindung ist das zylinderförmige Formteil bzw. der Bolzen des zylinderförmigen Formteils ausgehend von der Stirnseite des Ansatzes mindestens teilweise mit einem Innenkonus ausgebildet, mit dem das zylinderförmige Formteil bzw. der Bolzen auf einen korrospondierenden und im oder auf dem einen Möbelteil unlösbar oder lösbar festgelegten Konus nach dem Einsetzen oder Aufsetzen lagefixiert. Auf diese Weise wird sichergestellt, dass die am zylinderförmigen Formteil arretierten konischen Formteile stets eindeutig lagebestimmt sind und formstabil zu jeder Ausnehmung der zu verbindenden Möbelteile liegen, die für dieses Verbindungssystem vorgesehen sind. Damit wird gewährleistet, dass jedes zu verbindende Möbelteil problemlos mit jedem konischen Formteil in einer stabilen und in sich geschlossenen Form verbunden werden kann.

Vorteilhaft ist auch, wenn bevorzugt der Möbelteil festgelegte Konus mit einer Ringnut versehen ist und in der Ringnut bevorzugt ein elastischer Sicherungsring eingelegt ist, der beim Einsetzen des zylinderförmigen Formteils in eine Ringnut eingreift, die im Innenkonus oder in einen Ansatz vor oder nach dem Innenkonus des zylinderförmigen Formteils eingreift. Über diesen Sicherungsring ist das vormontierte Verbindungselement nach dem Einsetzen in dieses Möbelteil unverlierbar festgelegt. Folglich wird die Montage aber auch die Demontage der Möbelteile oder -baugruppen begünstigt und kann schnell und zeitsparend ausgeführt werden.

Vorteilhaft ist auch, wenn axial im zylinderförmigen Formteil oder im Bolzen des Formteils eine Durchgangsbohrung für eine Spannschraube vorgesehen ist, mit der das zylinderförmige Formteil im Möbelteil lösbar verspannt ist. Bevorzugt ist zu diesem Zweck der Konus im Möbelteil mit einem axial verlaufenden Innengewinde ausgebildet, in das die Spannschraube einschraubbar ist. Durch das Verspannen des zylinderförmigen Formteils auf dem festgelegten Konus im Möbelteil wird, was stets bis zum metallischen Anschlag der beiden Konusse erfolgt, gewährleistet, dass jedes eingesetzte zylinderförmige Formteil in einem Möbelteil eindeutig in axialer Richtung höhenjustiert ist, so dass nach dem Zusammenbau eines Möbelsystems, beispielsweise eines Tischsystems, die sichtbaren Oberflächen der Verbindungselemente eindeutig in einer Ebene mit dem zusammengefügten Möbelsystemen oder gleichmäßig versenkt im Möbelsystem liegen, wenn eine Dekorabdeckung vorgesehen werden soll.

Nach einer weiteren vorteilhaften Ausführungsform der Erfindung ist in der Aufnahmeöffnung der zu verbindenden Möbelteile eine der Innenkontur angepasste Buchse eingesetzt, die eine Innenkontur aufweist, die der Außenkontur des konischen Formteils angepasst ist. Vorteilhafterweise ist dabei die Buchse mindestens teilweise für die Durchführung der Stege längsgeschlitzt.

Vorteilhaft ist auch, wenn die Buchse an einer Seite mit einem durchmesservergrößerten Ansatz ausgebildet ist, der bevorzugt Mittel zur lösbaren Verbindung mit den zu verbindenden Möbelteilen aufweist.

Damit wird insbesondere bei zu verbindenden Möbelteilen aus Holz oder holzähnlichen Materialien die Aufnahmeöffnung im zu verbindenden Möbelteil stabilisiert, insbesondere dann, wenn die Montagepunkte in einem Bereich gelegt sind, der teilweise nur noch eine geringe Wandstärke zum Umriss des unterstützenden oder zum verbindenden Möbelteil aufweist.

Nach einer weiteren vorteilhaften Ausführungsform der Erfindung weist das konische Formteil am größten Durchmesser einen Flansch auf, der mit mindestens einem Stabilisierungsmittel versehen ist, das beim Aufsetzen des zu verbindenden Möbelteils mit einem am Ansatz der Buchse oder mit einem am Möbelteil vorgesehenen Stabilisierungsmittel einen stabilisierenden Formschluß zwischen dem Möbelteil und dem zu verbindenden Formteil ausbildet.

Mit dem stabilisierenden Formschluß zwischen dem zu verbindenden Möbelteil und dem konischen Formteil ist gewährleistet, dass die wirkenden Kräfte beim Aufsetzen und/oder Belasten des verbundenen Möbelteils aber auch bei einem möglichen Verspannen des konischen Formteils in der Aufnahmeöffnung durch die Buchse kompensiert und nicht auf die Aufnahmeöffnung selbst übertragen werden. Damit ist die Formstabilität einer teilweisen oder vollständig geschlitzten Aufnahmeöffnung gewährleistet und die Stabilität im Verbindungsbereich zwischen dem Möbelteil und dem konischen Formteil ist sichergestellt. Folglich kann auch bei Möbelteilen aus Holz oder holzähnlichen Materialen ausgeschlossen werden, dass die im Verbindungsbereich wirkenden Kräfte zur Instabilität oder gar zur Zerstörung des Verbindungsbereiches und damit zu einem labilen zusammengefügten Möbel oder Möbelsystem führen.

Vorteilhafterweise besteht die Buchse aber auch die Hülse mit der konischen Mantelfläche oder die konisch verlaufenden Streifen, mit denen der Konus am konischen Formteil ausgeführt werden kann, aus einem Hartkunststoff oder einem metallischen Material.

Das erfindungsgemäße Verbindungselemnet selbst besteht bevorzugt aus einem metallischen Werkstoff oder einem Hartkunststoff oder aus einer Kombination daraus.

Weitere Einzelheiten der Erfindung ergeben sich aus der nachfolgenden Beschreibung und den beigefügten Zeichnungen, in denen eine bevorzugte Ausführungsform des Verbindungselements und des Verbindungssystems am Beispiel für ein Tischsystem gezeigt sind.

In den Zeichnungen zeigen:
- Fig. 1:: ein Grundsystem des Verbindungselements mit angedeuteten Möbelteilen und Ergänzungen,
- Fig. 2:: eine Schnittdarstellung eines Grundsystems des Verbindungselements,
- Fig. 3:: eine Schnittdarstellung eines konischen Formteils mit Steg und Arretierungsmittel,
- Fig. 4:: eine Schnittdarstellung eines Grundsystems des Verbindungselements mit Buchse und Flansch im Bereich des konischen Formteils,
- Fig. 5:: einen Schnitt des Bolzens zur Ausbildung des zylinderförmigen Formteils,
- Fig. 6:: einen Schnitt des Spannmittels zur Ausbildung des zylinderförmigen Formteils,
- Fig. 7:: einen Schnitt des Konusses zur Aufnahme des zylinderförmigen Formteils,
- Fig. 8:: einen Schnitt durch ein Holzmöbelteil mit Konus zur Aufnahme des zylinderförmigen Formteils,
- Fig. 9:: einen Schnitt durch ein metallisches Möbelteil mit Konus zur Aufnahme des zylinderförmigen Formteils,
- Fig. 10:: eine schematische Draufsicht eines eingesetzten Grundelements mit angedeuteten verbundenen Möbelteilen,
- Fig. 11:: eine Draufsicht auf ein konisches Formteil mit Steg und Arretierungsmittel sowie einem ergänzenden Flansch.

Die nachfolgende ausführliche Beschreibung des Verbindungselements 1 und das damit ausgeführte Verbindungssystem wird beispielsweise an Möbelteilen 30; 31 - 31x beschrieben, die zu einem Tisch oder Tischsystem verbunden werden sollen, wobei das Möbelteil 30 ein Tischbein ist, das bei dieser gewählten Ausführungsform mit einer längsgeschlitzten Bohrung 26 versehen ist, und die Möbelteile 31 - 31x die Tischplatten sind. Allerdings schließt das nachfolgend beschriebene Beispiel die Verbindung von anderen Möbelteilen und -baugruppen mit diesem Verbindungselement 1 und Verbindungssystem nicht aus.

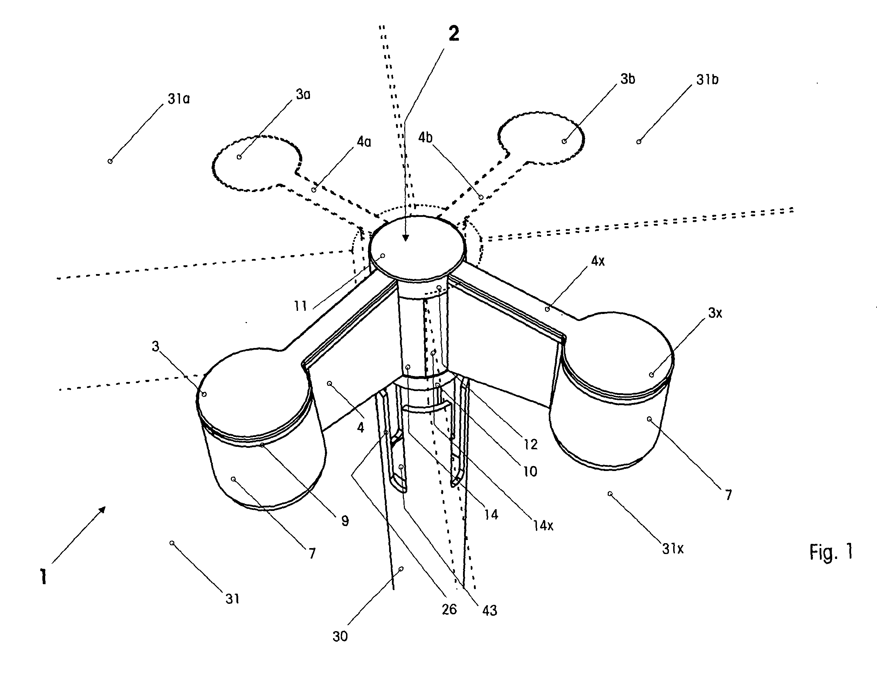

Das in Fig.1 mit durchgehenden Linien gezeigte Grundsystem eines Verbindungselements 1 besteht aus einem konischen Formteil 3 und dem Steg 4, der einstückig mit dem konischen Formteil 3 ist, und dem zylinderförmigen Formteil 2, an dem der Steg 4 unlösbar oder über Arretierungsmittel 14 lösbar festgelegt ist.

Dieses Grundsystem des Verbindungselements 1 kann, wie beispielsweise durch gestrichelte Linien in Fig. 1 gezeigt, mit einem oder mehreren und mit dem konischen Formteil 3 identischen konischen Formteilen 3a; 3b; 3x, die ebenfalls mit identischen Stegen 4a; 4b; 4x einstückig ausgebildet sind, ergänzt werden.

Dabei kann ein Verbindungselement 1 aus einem einstückigen Verbindungselement 1 bestehen, bei dem zwei konische Formteile 3 - 3b um 180° versetzt oder aus einem Verbindungselement 1, bei dem konische Formteile 3 - 3x um 90° und oder aus einem Verbindungselement 1, bei dem konische Formteile 3 - 3x zweimal um 90° und einmal um 180° versetzt oder aus einem Verbindungselement 1, bei dem zwei konische Formteile 3, 3a um 90° und ein konisches Formteil 3c um 135° zu den Formteilen 3, 3a versetzt am zylinderförmigen Formteil 2 festgelegt sind oder aus einem Verbindungselement 1 bestehen, bei dem einzelne konische Formteile 3 - 3x wahlweise nach der gewünschten Ausführungsform des Systemmöbels, beispielsweise eines Tisches oder eines Tischsystems am zylinderförmigen Teil 2 lösbar arretiert werden.

Ein Verbindungselement 1, bei dem an einem zentral liegenden zylinderförmigen Formteil 2 identische konische Formkörper 3 lösbar festgelegt sind, ist sehr variabel in den Verbindungsmöglichkeiten von Möbelteilen 30, 31 - 31x und wirtschaftlich in der Herstellung und Anwendung und wird daher als bevorzugtes Verbindungselement 1 der näheren Erläuterung zugrundegelegt, wobei die nachfolgenden Ausführungen zur Befestigung des zylinderförmigen Formteils 2 im Möbelteil 30 und die konische Ausführung der Mantelfläche sowie die Befestigung der konischen Formteile 3 - 3x auf ein einstückig ausgebildetes Verbindungselement übertragbar sind.

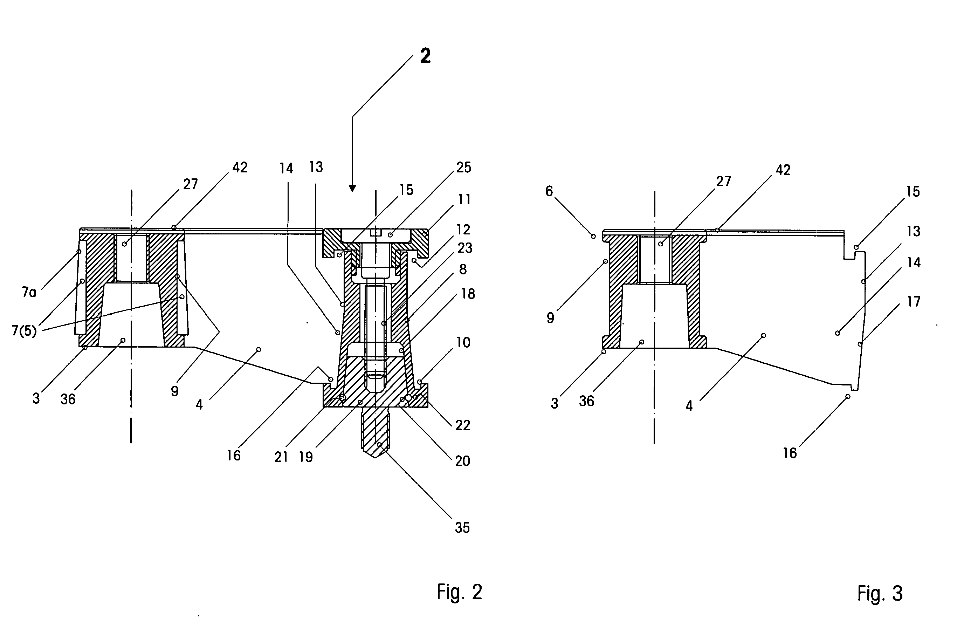

Das in Fig. 2 gezeigte Grundsystem eines lösbaren Verbindungselements 1 besteht aus einem konischen Formteil 3, und dem daran einstückig verbundenen Steg 4. Am freien Ende des Steges 4 ist ein Arretierungsmittel 14 ausgebildet, mit dem das konische Formteil 3 über den Steg 4 am zylinderförmigen Formteil 2 spielfrei und lagestabil festgelegt ist.

Das zylinderförmige Formteil 2 besteht aus einem Bolzen 8, der am unteren Ende mit einem hinterdrehten und durchmesservergrößerten Ansatz 10 und am oberen Ende mit einer Gewindebohrung 39 ausgebildet ist, in der ein Spannmittel 11 einschraubbar ist.

Das Spannmittel 11 ist mit einem zum Ansatz 10 des Bolzens 8 gerichteten hinterdrehten Ansatz 12 versehen, der mit dem gegenüberliegenden hinterdrehten Ansatz 10 des Bolzens 8 die Befestigungspunkte für die Arretierungsmittel 14 des Stegs 4 ausbilden.

Ausgehend vom Ende des hinterdrehten Ansatzes 10 ist im Bolzen 8 ein Innenkonus 18 ausgebildet, der mit einen korrospondierenden Konus 19 im Möbelteil 30, der beispielsweise über einem sich am Konus 19 anschließenden Befestigungsmittel 35 im Möbelteil 30 festgelegt ist, zusammenwirkt.

Der Konus 19 ist bevorzugt im Bereich des größten Durchmessers mit einer Ringnut 22 ausgebildet, in der ein Sicherungsring 21 eingelegt ist, der mit einer Ringnut 20 zusammenwirkt, die dekkungsgleich zur Ringnut 22 des Konusses 19 im Innenkonus 18 des Bolzens 8 gelegt ist.

Der Bolzen 8 ist zusätzlich mit einer Durchgangsbohrung 23 versehen, die axial fluchtend zu einer Bohrung 41 liegt, die im Spannmittel 11 vorgesehen ist. Durch die Bohrung 41 des Spannmittels 11 und die Durchgangsbohrung 23 im Bolzen 8 ist bevorzugt eine Spannschraube 25 geführt, mit der das aus Bolzen 8 und Spannmittel 11 bestehende zylinderförmige Formteil 2 in einer im Konus 19 des Möbelteils 30 vorgesehenen Gewindebohrung 28 verspannt werden kann. In diesem Fall ist der obere Bereich der Bohrung 41 mit einem durchmesservergrößerten Ansatz 40 für die Aufnahme des Kopfes der Spannschraube 25 ausgebildet, der eine Tiefe aufweist, dass der Kopf der Spannschraube 25 mindestens flächig zur Oberfläche des Spannmittels 11 abschliesst oder um die Dicke einer aufzusetzenden Dekorabdeckung 42 versenkt ist.

Fig. 3 zeigt ein konisches Formteil 3 mit Steg 4 und Arretierungsmittel 14, die bevorzugt aus einem einstückigen Gussteil bestehen. Das an der freien Stirnseite 13 des Steges 4 liegende Arretierungsmittel 14 besteht bevorzugt aus zwei gegenüberliegenden hakenförmigen Ansätzen 15, 16 und einer zur Mantelfläche der Buchse 8 korrospondierenden Anlagefläche 17. Das Arretierungsmittel 14 mit der Anlagefläche 17 und den hakenförmigen Ansätzen 15, 16 kann dabei direkt an der freien Stirnseite 13 des Steges 4 ausgebildet sein, vorteilhaft ist jedoch, wenn das Arretierungsmittel 14 an einem verbreiterten Ansatz des Steges 4 ausgebildet wird, der beispielsweise bei aneinandergefügten Arretierungsmitteln 14 - 14x gleich 360° ergibt. Auf diese Weise wird eine großflächigere Lastaufnahme des Arretierungsmittels 14 und damit eine verbesserte Kraftübertragung auf den Bolzen 8 des zylinderförmigen Formteils 2 erreicht, so dass die verbundenen Möbelteile 30, 31; 31a; 31b; 31x eine wesentlich erhöhte Stabilität aufweisen.

Zur Ausbildung des konischen Verlaufs des Formteils 3 ist bei dieser speziellen Ausführungsform, wie u.a. in Fig. 3 gezeigt, die Mantelfläche 6 des Formteils 3 mit einer axial verlaufenden durchmesserverkleinerten Eindrehung 9 ausgebildet, in der eine Hülse 7 mit einer konisch verlaufenden Oberfläche 7a axial lagestabilisiert eingesetzt ist. Die Hülse 7 ist bevorzugt eine austauschbare Schlitzhülze und besteht vorteilhafterweise aus einem Hartkunststoff.

Zur Ausbildung des konischen Verlaufs des Formteils 3 kann aber auch die Mantelfläche 6 des Formteils 3 mit nicht gezeigten und gleichmäßig auf dem Umfang des Formteils 3 versetzten Einfräsungen ausgebildet sein, in die konisch verlaufende Längsstreifen 5 lösbar oder unlösbar eingesetzt werden.

Das konische Formteil 3 kann aber auch aus einem einstückigen Kegelstumpf bestehen, der ohne oder mit gleichmäßig ausgefrästen konischen Längsstreifen versehen ist.

Das konische Formteil 3 kann zusätzlich mit einem Innenkonus 36 und einer sich nach oben anschließenden Gewindebohrung 27 ausgebildet sein, um bei Bedarf das konische Formteil 3 mit dem zu verbindenden Möbelteil 31 - 31x zu verspannen.

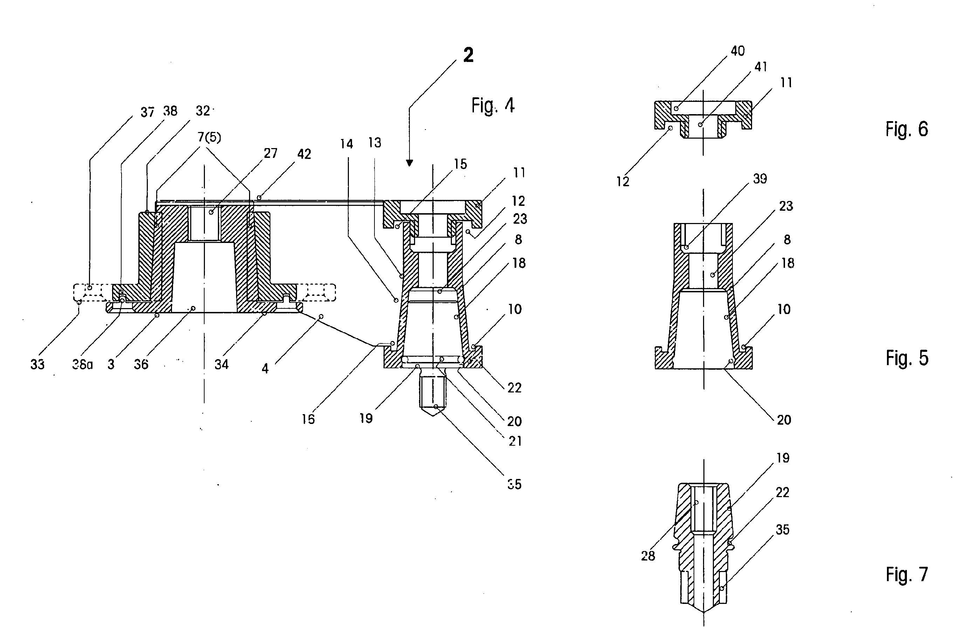

Fig. 4 zeigt eine bevorzugte Ausführungsform der Verbindung zwischen dem Formteil 3 und den Möbelteilen 31 - 31x, mit der insbesondere eine geschlitzte Aufnahmeöffnung 29 in den Möbelteilen 31- 31x nach dem Einsetzen des konischen Formteils 3 formstabil bleibt. Zu diesem Zweck ist in der Aufnahmeöffnung 29 eine mindestens teilweise geschlitzte Buchse 32 deckungsgleich mit dem Schlitz der geschlitzten Aufnahmeöffnung 29 eingesetzt, die mit einem Ansatz 33 ausgebildet ist, der sich gegen die unten liegenden Fläche eines Möbelteils 31 - 31x abstützt und der lösbare Verbindungsmittel 37 aufweist, die mit der angrenzenden Fläche eines Möbelteils 31 - 31x verbindbar sind.

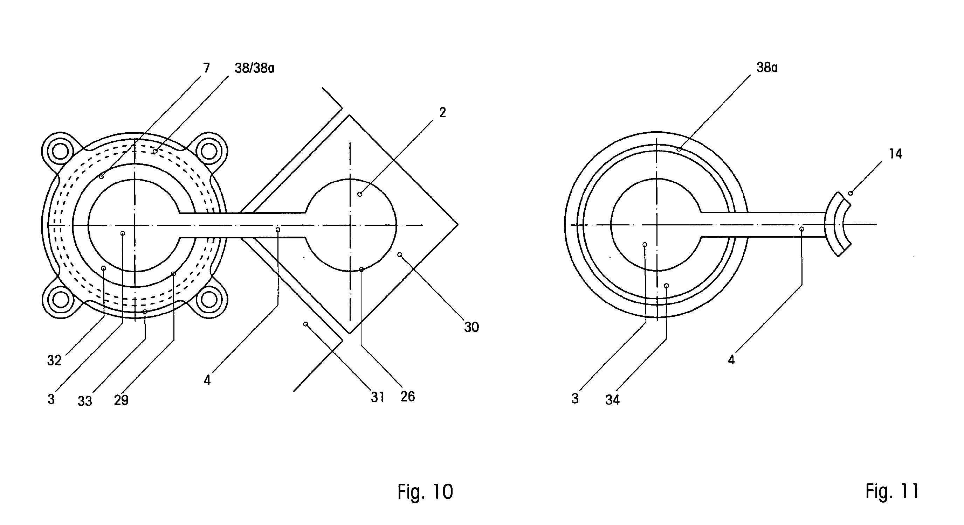

Zusätzlich kann der Ansatz 33 an der unteren Seite mit einem vollständig oder teilweise umlaufenden oder einzeln versetzten Stabilisierungsmittel 38, wie beispielsweise einer Nut, ausgebildet sein, in die mindestens ein Stabilisierungsmittel 38a eingreift, das, wie in Fig. 11 gezeigt, an einem umlaufenden Flansch 34 ausgebildet ist, der mit dem konischen Formteil 3 einstückig ist. Damit werden die wirkenden Kräfte in der Aufnahmeöffnung 29 durch die Buchse 32 kompensiert und die Aufnahmeöffnung 29 bleibt nach dem Einsetzen des konischen Formteils 3 formstabil und den innewohnenden Eigenschaften von Holz oder holzähnlichen Materialien wird entgegengewirkt. Folglich sichert die Verbindung dauerhaft auch nach mehrmaligen Montagen und Demontagen immer einen stabilen Stand der miteinander verbundenen Möbelteile 30, 31; 31a; 31b; 31x.

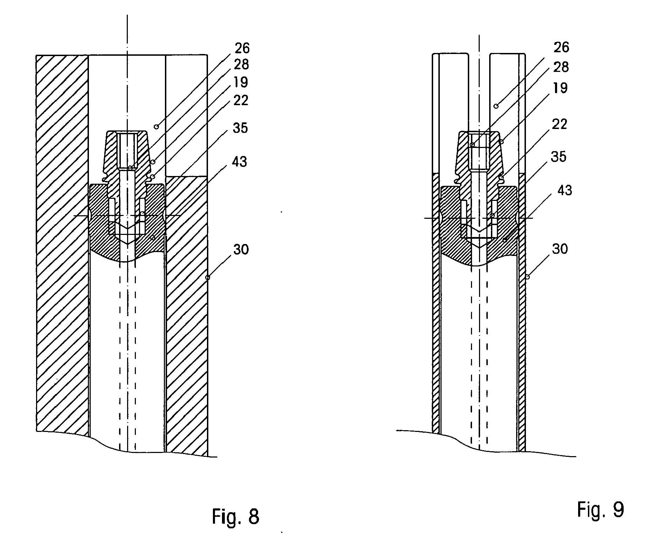

Fig. 8 und Fig. 9 zeigen ein Möbelteil 30 aus Holz bzw. aus einem metallischen Material mit einer einfachen oder mehrfach längsgeschlitzten Bohrung 26 zur Durchführung der Steges 4; 4a; 4b; 4x, die einstückig mit dem konischen Formteil 3; 3a; 3b; 3x sind. Unterhalb der Schlitzung der Bohrung 26 ist in der schlitzlos weitergeführten Bohrung 26 und auf dem Grund der Bohrung 26 der Konus 19 zur Aufnahme des zylinderförmigen Formteils 2 mit dem Befestigungsmittel 35 so festgelegt, dass der Innenkonus 18 des zylinderförmigen Formteils 2 behinderungsfrei und vollständig mit dem Konus 19 verspannt werden kann. Die Bohrung 26 kann auch vorteilhafterweise nach der Schlitztiefe für den Steg 4 in ungeschlitzter Form weitergeführt werden und sich auch vollständig durch das Möbelteil 30 erstrecken. In diesem Fall ist eine Befestigungsbuchse 43 in der Bohrung 26 positioniert, die mit einem Verbindungsmittel zur Aufnahme des Befestigungsmittels 35 des Konusses 19 ausgebildet ist. Bei dieser Ausführungsart ist das Befstigungsmittel 43 über geeignete und nicht dargestellte Mittel axial lagestabil in der Bohrung 29 festgelegt und bevorzugt zusätzlich verklebt.

Zur Ausführung eines Verbindungssystems mit einem lösbar verbundenen Verbindungselement 1 beispielsweise zum Zusammenfügen eines Tisches oder eines bestimmten Tischsystems wird das Verbindungselement 1 individuell nach der gewünschten Ausführung eines Tisches oder eines Tischsystems zusammengestellt. Dazu werden entsprechend der gewünschten Ausführungsform des Tisches oder Tischsystems am zylinderförmigen Formteil 2 ein oder mehrere konische Formteile 3 - 3x jeweils über den Steg 4 - 4x und den daran angeordneten Arretierungsmitteln 14 - 14x spielfrei arretiert. Zu diesem Zweck wird jeweils der hakenförmige Ansatz 16 eines Arretierungsmittels 14 - 14x in den hinterdrehten Ansatz 10 des Bolzens 6 eingesetzt und die Anlageflächen 17 eines jeden Arretierungsmittels 14 - 14x an die mit der Anlagefläche 17 korrospondierende Mantelfläche des Bolzens 8 angedrückt.

Anschließend wird das Spannmittel 11 mit dem zu den Arretierungsmitteln 14 - 14x gerichteten hinterdrehten Ansatz 12 in den Bolzen 8 eingeschaubt, wobei der hakenförmige Ansatz 15 der Arretierungsmittel 14 - 14x in den hinterdrehten Ansatz 12 des Spannmittels 11 eingreift, so dass die eingesetzten Stege 4 - 4x nach dem Verspannen des Spannmittels 11 lagestabil und spielfrei am Bolzen 8 und damit am zylinderförmigen Formteil 2 fixiert sind.

Damit kann das Verbindungselement 1 auf eine sehr einfache Art und Weise mit identischen Bauteilen individuell ausgelegt werden und ist für die unterschiedlichsten Verbindungssysteme von Möbelteilen 30, 31; 31a; 31b; 31x, insbesondere von Tischen und Tischformationen, nutzbar.

Ein Verbindungssystem mit einem so zusammengefügten Verbindungselement 1, das aber auch ein einstückiges Verbindungselement 1 sein kann, ist in Fig. 10 gezeigt, das der einfachheitshalber nur ein liniares Verbindungselement 1 ist. Die Verbindungsform zwischen dem Möbelteil 31 und dem konischen Formteil 3 ist aber prinzipiell auch auf die Verbindungsformen zwischen den Möbelteilen 31a - 31x und den konischen Formteilen 3a - 3x übertragbar.

Wie in Fig 4 gezeigt, ist das zylinderförmige Formteil 2 des Verbindungsmittels 1 in ein Möbelteil 30 eingesetzt, wie es beispielsweise in Fig. 8 und Fig. 9 gezeigt ist. Beim Einsetzen des zylinderförmigen Formteils 2 in die geschlitzte Bohrung 26 wird der Steg 4 bündig durch den Schlitz 4 durchgeführt und der Innenkonus 18 von dem Konus 19 im Möbelteil 30 aufgenommen und somit das zylinderförmige Formteil 2 lagestabilisiert. Anschließend wird das zylinderförmige Formteil 2 im Konus 19 mittels der Spannschraube 25 verspannt.

Nach dem arretierten Festlegen des zylinderförmigen Formteils 2 im Möbelteil 30, in diesem Fall einem Tischbein, wird auf das konische Formteil 2 ein Möbelteil 31, in diesem Fall eine Tischplatte mit einer in der geschlitzten Aufnahmeöffnung 29 zur Durchführung des Steges 4 aufgelegt. Bei der in Fig. 4 und Fig. 10 bevorzugt gezeigten Ausführungsform ist eine der geschlitzten Aufnahmeöffnung 29 angepaßte Buchse 32 mit einem Ansatz 33 eingesetzt und bevorzugt eingeklebt, die mit lösbaren Verbindungsmitteln 37 zum Möbelteil 31 und einem Stabilisierungsmittel 38 ausgebildet ist.

Ebenfalls, wie bei der in Fig. 4 oder Fig. 10 gezeigten speziellen Ausführungsform, ist in diesem Fall das konische Formteil 3 mit einem durchmesservergrößerten Flansch 34 ausgebildet, auf dem ein Stabilisierungsmittel 38a gelegt ist, wie auch in Fig. 11 gezeigt, das mit dem Stabilisierungsmittel 38 am Ansatz 33 der Buchse 32 nach dem Aufsetzen des Möbelteils 31, in diesem Fall wieder der Tischplatte, zusammenwirkt und damit die Buchse in der geschlitzten Aufnahmeöffnung 29 stabilisiert.

Bei Bedarf kann dann das eingesetzte konische Formteil 3 in der Aufnahmeöffnung 29 mittels des ausgebildeten Innenkonusses 36 und der sich daran anschließenden Gewindebohrung 27 verspannt werden.

Zur veränderten designerischen Gestaltung der Oberfläche eines Tisches oder eines Tischsystems kann das Verbindungselement 1 auch insgesamt oder teilweise tiefer in die Möbelteile 30; 31 - 31x eingelegt und mit einer Dekorabdeckung 42 teilweise oder vollständig überdeckt werden.

### Bezugszeichen

- 1: Verbindungselement
- 2: zylinderförmiges Formteil
- 3 - 3x: konisches Formteil
- 4 - 4x: Steg
- 5: konische Längsstreifen
- 6: Mantelfläche
- 7: Hülse
- 7a: Oberfläche
- 8: Bolzen
- 9: durchmesserverkleinerte Eindrehung
- 10: hinterdrehter Ansatz
- 11: Spannmittel
- 12: hinterdrehter Ansatz
- 13: freie Stirnseite
- 14 - 14x: Arretierungsmittel
- 15: hakenförmiger Ansatz
- 16: hakenförmiger Ansatz
- 17: Anlagefläche
- 18: Innenkonus
- 19: Konus
- 20: Ringnut
- 21: Sicherungsring
- 22: Ringnut
- 23: Durchgangsbohrung
- 24: Innengewinde
- 25: Spannschraube
- 26: längsgeschlitzte Bohrung
- 27: Gewindebohrung
- 28: Gewindebohrung
- 29: Aufnahmeöffnung
- 30: Möbelteil
- 31 - 31x: Möbelteil
- 32: Buchse
- 33: Ansatz/Buchse
- 34: Flansch
- 35: Befestigungsmittel
- 36: Innenkonus
- 37: lösbare Verbindungsmittel
- 38 - 38a: Stabilisierungsmittel
- 39: Gewindebohrung
- 40: Ansatz
- 41: Bohrung
- 42: Dekorabdeckung
- 43: Befestigungsbuchse

## Patentansprüche

1. Verbindungselement und lösbares Verbindungssystem für vorgefertigte Möbelteile oder -baugruppen, **dadurch gekennzeichnet, dass** das Verbindungselement (1) aus einem zylinderförmigen Formteil (2) beliebigen Querschnitts und mindestens aus einem konischen verlaufenden Formteil (3; 3a; 3b; 3x) besteht, das umfangsseitig am zylinderförmigen Formteil (2) mittels eines Steges (4; 4a; 4b; 4x) fest oder lösbar festgelegt ist und dass zur Herstellung der Verbindung zwischen mindestens zwei Möbelteilen (30; 31; 31a; 31b; 31c) das zylinderförmige Formteil (2) in eine vertikal liegende und mindestens einfach längsgeschlitzte Bohrung (26) des Möbelteils (30) fest oder lösbar eingesetzt oder auf dem Möbelteil (30) fest oder lösbar aufgesetzt ist und das konisch verlaufende Formteil (3; 3a; 3b; 3x) in eine für den Steg (4; 4a; 4b; 4x) mindestens teilweise seitlich geschlitzte Aufnahmeöffnung (29) des zu verbindenden Möbelteils (31; 31a; 31b; 31x) eingesetzt ist, die eine Innenkontur aufweist, die mit dem eingesetzten konischen verlaufenden Formteil (3; 3a; 3b; 3x) eine stabile formschlüssige Verbindung ausbildet.

2. Verbindungselement und lösbares Verbindungssystem nach Anspruch 1, **dadurch gekennzeichnet, dass** das konische verlaufende Formteil (3; 3a; 3b; 3x) aus einem beliebigen zylinderischen Querschnitt besteht und die Mantelfläche (6) mit mindestens drei annähernd gleichmäßig versetzt und konisch ausgebildeten Längsstreifen (5) versehen ist, die einstückig auf der Mantelfläche (6) ausgebildet sind oder die lösbar oder unlösbar in der Mantelfläche (6) in axial verlaufenden Einfräsungen eingesetzt sind.

3. Verbindungselement und lösbares Verbindungssystem nach Anspruch 1, **dadurch gekennzeichnet, dass** das konische verlaufende Formteil (3; 3a; 3b; 3x) aus einem beliebigen zylinderischen Querschnitt besteht und die Mantelfläche (6) mit einer durchmesserverkleinerten Eindrehung (9) ausgebildet ist, in der eine Hülse (7) mit einer konisch verlaufenden Oberfläche (7a) lösbar oder fest eingesetzt ist.

4. Verbindungselement und lösbares Verbindungssystem nach Anspruch 3, **dadurch gekennzeichnet, dass** die Hülse (7) eine Spreizhülse ist.

5. Verbindungselement und lösbares Verbindungssystem nach Anspruch 4, **dadurch gekennzeichnet, dass** die in der Eindrehung (9) eingesetzte Hülse (7) mindestens axial lagestabilisiert ist.

6. Verbindungselement und lösbares Verbindungssystem nach einem der Ansprüche 1 bis 5, **dadurch gekennzeichnet, dass** die lösbare Verbindung der Stege (4; 4a; 4b; 4x ) am zylinderförmigen Formteil (2) eine arretierte Klemmverbindung ist, wobei das Formteil (2) aus einem Bolzen (8) besteht, der auf der einen Seite mit einem nach innen gerichteten hinterdrehten Ansatz (10) und auf der anderen Seite durch ein axial einschraubbares Spannmittel (11) mit zum Ansatz (10) des Bolzens (8) gerichteten hinterdrehten Ansatz (12) begrenzt ist und der Steg (4; 4a; 4b; 4x)) an der freien Stirnseite (13) mit einem Arretierungsmittel (14; 14a; 14b; 14x) ausgebildet ist, dass eine zum Formteil (2) korrospondierende Form aufweist und axial beiderseits mit je einem hakenförmigen Ansatz ( 15; 16) ausgebildet ist, die nach dem Ansetzen des Steges (4; 4a; 4b; 4x) an den Bolzen (8) formschlüssig einerseits in den hinterdrehten Ansatz (10) des Bolzens (8) und andererseits in den hinterdrehten Ansatz (12) des zu verspannenden Spannmittels (11) eingreifen.

7. Verbindungselement und lösbares Verbindungssystem nach Anspruch 6, **dadurch gekennzeichnet, dass** die korrospondierende Anlagefläche 17 des Arretierungsmittels (14; 14a; 14b; 14x) des Steges 4 und die Mantelfläche des Bolzens (8) ausgehend von der Hinterdrehung des Ansatzes (10) des Bolzens (8) mindestens teilweise konisch verlaufen.

8. Verbindungselement und lösbares Verbindungssystem nach einem der Ansprüche 1 bis 7, **dadurch gekennzeichnet, dass** das zylinderförmige Formteil (2) bzw. der Bolzen (8) des zylinderförmigen Formteils (2) ausgehend von der Stirnseite des Ansatzes (10) mindestens teilweise mit einem Innenkonus (18) ausgebildet ist, mit dem das Formteil (2) bzw. der Bolzen (8) auf einem korrospondierenden und im oder auf dem Möbelteil (30) unlösbar oder lösbar festgelegten Konus (19) nach dem Einsetzen oder Aufsetzen lagefixiert ist.

9. Verbindungselement und lösbares Verbindungssystem nach Anspruch 8, **dadurch gekennzeichnet, dass** der Konus (19) im Möbelteil (30) mit einer Ringnut (22) versehen ist und in der Ringnut (22) ein elastischer Sicherungsring (21) eingelegt ist, der beim Einsetzen des Formteils (2) in eine Ringnut (20) eingreift, die im Innenkonus (18) oder in einem zylinderischen Ansatz vor oder nach dem Innenkonus (18) des zylinderischen Formteils (2) eingreift.

10. Verbindungselement und lösbares Verbindungssystem nach einem der Ansprüche 1 bis 8, **dadurch gekennzeichnet, dass** axial im Formteil (2) oder dem Bolzen (8) des Formteils (2) eine Durchgangsbohrung (23) für eine Spannschraube (25) vorgesehen ist, mit der das Formteil (2) im Möbelteil (30) lösbar verspannt ist.

11. Verbindungselement und lösbares Verbindungssystem nach einem der Ansprüche 8 bis 10, **dadurch gekennzeichnet, dass** der im Möbelteil (30) festgelegte Konus (19) mit einem axial verlaufenden Innengewinde (24) ausgebildet ist, in dem die Spannschraube (25) einschraubbar ist.

12. Verbindungselement und lösbares Verbindungssystem nach einem der Ansprüche 1 bis 11, **dadurch gekennzeichnet, dass** in der Aufnahmeöffnung (29) der zu verbindenden Möbelteile (31; 31a; 31b; 31x) eine der Innenkontur angepaßte Buchse (32) eingesetzt ist, die eine Innenkontur aufweist, die der Außenkontur des Formteils (3) angepaßt ist.

13. Verbindungselement und lösbares Verbindungssystem nach Anspruch 12, **dadurch gekennzeichnet, dass** die Buchse (32) mindestens teilweise längsgeschlitzt ist.

14. Verbindungselement und lösbares Verbindungssystem nach Anspruch 12 und 13, **dadurch gekennzeichnet, dass** die Buchse (32) an einer Seite mit einem durchmesservergrößerten Ansatz (33) ausgebildet ist.

15. Verbindungselement und lösbares Verbindungssystem nach Anspruch 14, **dadurch gekennzeichnet, dass** der Ansatz (33) Mittel zur lösbaren Verbindung (37) mit den Möbelteil (31; 31a; 31b; 31x) aufweist.

16. Verbindungselement und lösbares Verbindungssystem nach einem der Ansprüche 1 bis 15, **dadurch gekennzeichnet, dass** das konische Formteil (3; 3a; 3b; 3x) am größten Durchmesser einen Flansch (34) aufweist, der mit mindestens einem Stabilisierungsmittel (38a) versehen ist, das beim Aufsetzen des zu verbindenden Möbelteils (31; 31a; 31b; 31x) mit einem am Ansatz (33) der Buchse (32) oder mit einem am Möbelteil (31; 31a; 31b; 31x) vorgesehenen Stabilisierungsmittel (38) einen stabilisierenden Formschluß zwischen dem Möbelteil (31; 31a; 31b; 31x) und dem zu verbindenden Formteil (3; 3a; 3b; 3x) ausbildet.

17. Verbindungselement und lösbares Verbindungssystem nach einem der Ansprüche 2 bis 5 und 12 bis 14, **dadurch gekennzeichnet, dass** die Hülse (7) und/oder die Buchse (32) und/oder die konischen Streifen (5) aus einem Hartkunststoff oder einem metallischen Material bestehen.

18. Verbindungselement und lösbares Verbindungssystem nach einem der Ansprüche 1 bis 18, **dadurch gekennzeichnet, dass** das Verbindungselement (1) aus einem metallischen Werkstoff oder einem Hartkunststoff oder einer Kombination daraus besteht.
